# NEUE EUROPÄISCHE PATENTSCHRIFT

(11) **EP 0 558 452 B2**
(45) Veröffentlichungstag und Bekanntmachung des Hinweises auf die Entscheidung über den Einspruch: **16.06.1999**
(45) Hinweis auf die Patenterteilung: 03.05.1995
(21) Anmeldenummer: 93810107.8
(22) Anmeldetag: 19.02.1993
(51) Int. Cl.: B01D 53/96

(54) **Reinigen von Abgasen aus Verbrennungsanlagen**
Purification of combustion gases
Purification des effluents gazeux de combustion

(30) Priorität: 24.02.1992 CH 55692
(43) Veröffentlichungstag der Anmeldung: 01.09.1993
(73) Patentinhaber: Hug, Hans Thomas, CH-8484 Weisslingen (CH); Hartenstein, Axel, CH-8431 Neftenbach (CH); Hug, Michael, CH-9547 Heiterschen TG (CH)
(72) Erfinder: Hug, Hans Thomas, CH-8484 Weisslingen (CH); Hartenstein, Axel, CH-8431 Neftenbach (CH); Hug, Michael, CH-9547 Heiterschen TG (CH)
(74) Vertreter: Patentanwälte Breiter + Wiedmer AG

(56) Entgegenhaltungen:
- EP-A- 0 410 440
- EP-A- 0 487 886
- DE-A- 3 733 501
- DE-A- 3 830 045
- DE-A- 4 032 085
- A. Hartenstein, T Hug, Katalysatoren in Abgasen von Verbrennungsanlagen, Hug-Bulletin 9.81 CH, 1-14, 1981
- M Koebel, M Elsner, H Eicher, Mit Harnstoff gegen Stickoxide, Technische Rundschau, 49/90, 74-78, 1990

## Beschreibung

Die Erfindung bezieht sich auf ein Verfahren zum Reinigen von Abgasen aus Verbrennungsanlagen, insbesondere von Diesel-, Zündstrahl-, Gas/Diesel-, grossen Gas-Otto-Motoren, Gasturbinen und Kesselanlagen mit Verfeuerung von flüssigen, gasförmigen oder festen Brennstoffen, nach dem Oberbegriff von Patentanspruch 1. Weiter betrifft die Erfindung eine Abgasreinigungsanlage nach dem dem Oberbegriff von Patentanspruch 9 zur Durchführung des Verfahrens.

Ein solches Verfahren bzw. Vorrichtung wurde durch das HUG-Bulletin 5.91 CH durch die Erfinder offenbart.

Katalysatoren in Abgasen von Verbrennungsanlagen haben eine stark zunehmende Bedeutung und bilden in zahlreichen Ländern eine notwendige Voraussetzung zur Erfüllung von gesetzlichen Normen.

Am besten umweltschonend und energiesparend sind Verbrennungsanlagen mit höchsten Wirkungsgraden, bei gleichzeitiger Eliminierung von schädlichen Gasen durch Katalysatoren. Die pro Kilogramm Oel oder Kubikmeter Gas gewonnene Nutzenergie (Wirkungsgrad) kann ausschlaggebend sein, ob ein System energetisch sinnvoll und umweltschonend ist. Höchste Schadstoff-Umwandlungsraten können nur mit Einsatz der Katalysatortechnik erzielt werden.

Katalysatoren werden in zwei Hauptgruppen unterteilt:
- Dreiwege-Katalysatoren, welche im Betrieb ohne Luftüberschuss eingesetzt werden, sie sind im vorliegenden Fall nicht von Interesse.
- SCR-Katalysatoren (SCR = Selective Catalytic Reduction), welche in Abgasreinigungsanlagen von Verbrennungsanlagen eingesetzt werden. Mit SCR-Katalysatoren können auch hohe Stickoxid-Werte auf oder unter die von Gesetzgebern verlangten Grenzwerte gebracht werden. Zur NOx-Reduktion wird neben einem selektiven Reduktionskatalysator ein Reaktionsmittel eingesetzt. Ammoniak ist als Reaktionsmittel sehr gut geeignet, stellt jedoch für den Transport, die Lagerung und die Handhabung ein problematisches Medium dar. Als Ersatz für Ammoniak wird deshalb auch Harnstoff eingesetzt. Dieser wird als weisses, trockenes Granulat oder als gebrauchsfertige Lösung geliefert, ist ungiftig, geruchlos und sowohl für die Lagerung als auch den Transport völlig problemlos.

In der DE-A1 3830045 wird ein Verfahren zur Reduktion von in Abgasen, insbesondere von Dieselmaschinen, enthaltenen Stickoxiden unter oxidierenden Bedingungen mittels eines zeolithhaltigen Katalysators vorgeschlagen, wobei dem Abgas eine harnstoffhaltige Substanz als Reduktionsmittel zugegeben wird. Die Zumessung des Reduktionsmittels kann stöchiometrisch, unter- oder überstöchiometrisch erfolgen. Mit der DE-A1 3830045 soll eine Möglichkeit zur Reduktion von Stickoxiden in Abgasen, unter Vermeidung problematischer Reduktionsmittel, an einem zeolithhaltigen Katalysator, auch bei geringerem Kohlenwasserstoffgehalt der Abgase, geschaffen werden. Der zeolithhaltige Katalysator ist deshalb für DE,A1 3830045 von grundlegender Bedeutung.

In der EP-A1 0487886 werden ein Verfahren und eine Vorrichtung mit einem SCR-Katalysator beschrieben, welche der selektiven katalytischen NOₓ-Reduktion in sauerstoffhaltigen Abgasen dienen. Aus einem Flüssigkeitsbehälter wird Harnstofflösung zu einer Zerstäuberdüse geleitet und direkt auf einen geheizten Verdampfer gesprüht, an welchen ein Hydrolysekatalysator und der SCR-Katalysator anschliessen. Der Verdampfer und der nachgeschaltete Hydrolysekatalysator können im heissen Abgasstrom oder in einer Zuflussleitung angeordnet sein. Auf den durch die zerstäubte Harnstofflösung beaufschlagten heissen Metalleberflächen von Verdamper und Hydrolysekatalysator bilden sich zu Verstopfungen führende Ablagerungen.

Wie beim Verfahren gemäß HUG-Bulletin 5.91 CH haben sich die Erfinder die Aufgabe gestellt, ein Verfahren zum Reinigen von Abgasen durch Eindüsen einer Harnstofflösung und eine Abgasreinigungsanlage zur Durchführung des Verfahrens der eingangs genannten Art zu schaffen, welche einen möglichst vollständigen Zerfall des Harnstoffs in Ammoniak und Kohlendioxid oder dessen Umwandlung in Ammoniak, Zyanursäure und Kohlendioxid verbessern, wobei die harnstoffhaltigen Wassertröpfchen im Abgasstrom nicht auf eine heisse Metalloberfläche auftreffen und untragbare Ablagerungen bilden sollen. Andererseits soll sich der Harnstoff nicht vor dem Versprühen der Lösung zersetzen. Es sollen keine zu entsorgenden Abfallprodukte, sondern mit Hilfe eines nicht zeolithhaltigen Katalysators praktisch ausschliesslich unschädliche Gase ausgestossen werden, ohne dass die hohen Schadstoffumwandlungsraten und ein wirtschaftlicher Betrieb beeinträchtigt werden.

Zusätzlich soll ein Verstopfen der Düsen Verhindert werden.

In bezug auf das Verfahren wird die Aufgabe erfindungsgemäss nach dem Kennzeichen von Patentanspruch 1 gelöst.

Die Reaktion verläuft praktisch vollständig. Darunter wird hier verstanden, dass schädliche Gase substanz- und temperaturabhängig mit hohem, vorzugsweise über 80%, insbesondere über 90%, liegendem Wirkungsgrad umgesetzt werden.

Die wässrige Harnstofflösung wird vorzugsweise mit Förderdruck, also mit einem geringen Überdruck, in den Abgasstrom geleitet. Die aerosolartige Zerstäubung erfolgt durch Luft mit einem Ueberdruck von zweckmässig 0,2 bis 8 bar, vorzugsweise von 0,5 bis 6 bar, bei kleinen Anlagen 0,5 bis 1,5 bar.

Dadurch wird die ausfliessende wässrige Harnstofflösung durch Injektorwirkung mitgerissen und zerstäubt. Der Abgaskanal ist bevorzugt so dimensioniert, dass der Abgasstrom vorzugsweise mit einer Geschwindigkeit von 15 bis 60 m/sec fliesst.

Die Druckluft dient jedoch nicht nur als Fördermittel, sondern auch als Kühlmittel. Die Druckluft wird derart entlang des Harnstoffleiters geführt, dass die Temperatur der Harnstofflösung im Harnstoffleiter und bis zur Austrittsöffnung der Düse vorzugsweise bei höchstens 100°C gehalten wird. Bei höheren Temperaturen beginnt sich der Harnstoff vor dem Zerstäuben der Lösung zu zersetzen, was unerwünscht ist.

Nach einer weiterbildenden Ausführungsform wird die wässrige Harnstofflösung nach dem Austritt aus der einen Drall erzeugenden Luftdüse durch die Druckluft nicht nur versprüht, sondern zugleich rotiert. Die Verteilung des versprühten Reaktionsmittels im Abgasstrom wird dadurch weiter verbessert.

Um über den ganzen Abgasquerschnitt eine gleichmässige und vollständige Reaktion ohne örtlichen Ueberschuss an Reaktionsmittel zu erhalten, wird das Reaktionsmittel vorzugsweise genau stöchiometrisch zum NOx-Massenstrom vollautomatisch zudosiert.

Nach dem homogenen Mischen im Mischkanal wird der mit zerstäubter wässriger Harnstofflösung bzw. deren Zersetzungsprodukten, die vorwiegend aus Ammoniak (NH₃) bestehen, homogen gemischte Abgasstrom im Reaktionskanal in den zahlreichen Längskanälen der Katalysatoren laminar und im freien Reaktionskanal turbulent geführt. Dies kann sowohl in der Reduktions- als auch in einer fakultativen Oxidationsstufe erfolgen.

In bezug auf den NOₓ-Umsatz werden möglichst hoch selektiv wirkende SCR-Katalysatoren eingesetzt. Oxidationskatalysatoren können in bezug auf die CO-, HC- und/oder SO₂-Komponenten selektiv einwirken. Derartige Katalysatoren werden gezielt ausgewählt und eingesetzt.

Beim Einschalten der Abgasreinigungsanlage wird zweckmässig vorerst Druckluft eingeblasen, damit Harnstoffleiter und Düse gut abgekühlt sind. Dann wird durch Umschalten eines Dreiwege-Ventils die wässrige Harnstofflösung in der vorausbestimmten Dosierung zugeschaltet. Beim Reaktionsende wird vorerst der Zufluss der wässrigen Harnstofflösung, wiederum durch Betätigung des Dreiwege-Ventils, unterbrochen. Anschliessend wird mit dem Umschalten Druckluft in den Harnstoffleiter gegeben und die Düse sauber ausgeblasen, damit keine Rückstände entstehen können.

Der Druckluftvolumenstrom wird gemessen und überwacht. Sobald er ein vorgegebenes Minimum unterschreitet, wird die Zufuhr von wässriger Harnstofflösung unterbrochen, um zu verhindern, dass diese nicht oder nicht vollständig versprüht in den Abgasstrom eintritt.

Bei einem allfälligen Verstopfen der Düse während der Reaktion steigt der Druck im Harnstoffleiter und/oder im Mantelrohr für die Druckluft sofort an. Beim Unterschreiten eines vorgegebenen Durchflusses von Luft oder Harnstofflösung und/oder beim Ueberschreiten eines vorgegebenen Ueberdrucks leiten Sensoren die sofortige Ausschaltung der Zufuhr von wässriger Harnstofflösung automatisch ein.

Beim Ausschalten der Reaktionsmittelzufuhr wird automatisch sofort Druckluft in den Harnstoffleiter gegeben und dieser ausgeblasen. Bei einer Verstopfung steigt der Druck allmählich, beispielsweise innerhalb von 30 sec, bis zum Kompressordruck an. Im Normalfall wird die Verstopfung im Verlauf dieses Druckaufbaus ausgeblasen und die Düse gereinigt. Die Reaktionsmittelzufuhr bleibt ausgeschaltet, bis wieder normale Verhältnisse hergestellt sind.

Kann die Verstopfung nicht mit Druckluft ausgeblasen werden, wird zu einfachen, später gezeigten mechanischen Mitteln zur Reinigung gegriffen.

In bezug auf die Abgasreinigungsanlage zur Durchführung des Verfahrens wird die Aufgabe erfindungsgemäss nach dem Kennzeichen von Patentanspruch 13 gelöst.

Ein Reduktionskatalysator ist während des Prozesses immer, ein Oxidationskatalysator nur bei Bedarf eingebaut.

Die Vorteile des erfindungsgemässen Reinigens von Abgasen lassen sich wie folgt zusammenfassen:
- Es entstehen keine zu entsorgenden Abfallprodukte, sondern nur unschädliche Gase.
- Dank des Zweistoffdüsenapparats kann die wässrige Harnstofflösung mit grösster Betriebssicherheit so eingedüst werden, dass der Harnstoff vollständig zerfällt. Die Druckluft wirkt gleichzeitig als Transport-, Kühl- und Ausblasmedium.
- Die Katalysatoren sind rezyklierbar. Sie können von Hand, ohne Hebevorrichtungen, in die Katalysatorenkasten eingebaut und daraus ausgebaut werden.
- Die Anlage kann räumlichen Voraussetzungen ideal angepasst werden, indem sie gestreckt oder kompakt, horizontal, vertikal oder schräg, ausgeführt ist.
- Die Abgase von allen mit Sauerstoffüberschuss arbeitenden Verbrennungsprozessen in Motoren, Kesseln und Turbinen können gereinigt werden.
- Der Eindüsapparat arbeitet in einem niedrigen bis mittleren Druckbereich, die wässrige Harnstofflösung wird mit geringem Förderdruck zugeleitet, die Druckluft zum Kühlen und Versprühen lediglich mit einem Ueberdruck von 0,2 bis 8 bar.
- Der Eindüsapparat schaltet durch Betätigung eines Dreiwege-Ventils bei einer Verstopfung und am Arbeitsende automatisch auf Selbstreinigung mit Druckluft um.

Der Abstand der in den Mischkanal eingebauten Kreuzstrommischer liegt vorzugsweise im Bereich von (1,5-2,5) x dₕ. Der hydraulische Durchmesser dₕ entspricht der vierfachen Innenfläche des betreffenden Rohres dividiert durch deren Umfang. Der Einbau eines Oxidationskatalysators erfolgt je nach Anlage und Abgas, falls es die Gegebenheiten und Anforderungen erlauben, kann er auch weggelassen werden.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine Reinigungsanlage mit kompakt angeordneten Kanälen,
- Fig. 2 eine Reinigungsanlage mit gestreckt angeordneten Kanälen,
- Fig. 3 eine perspektivische Darstellung eines Pyrolysationskanals,
- Fig. 4 eine perspektivische Darstellung eines Mischkanals,
- Fig. 5 eine perspektivische Darstellung eines Reaktionskanals,
- Fig. 5a eine Ansicht eines Wabenkörpers,
- Fig. 6 eine perspektivische Darstellung der zusammengebauten drei Kanäle gemäss Fig. 3 bis 5,
- Fig. 7 eine perspektivische Darstellung von gestreckt angeordneten Pyrolysations-, Gemisch-und Reaktionskanal,
- Fig. 8 ein Zweistoffdüsenapparat mit einem Dreiwegehahn in Arbeitsstellung,
- Fig. 9 einen Zweistoffdüsenapparat mit einem Dreiwegehahn in Ausblasstellung,
- Fig. 10 einen vergrösserten Schnitt durch einen Zweistoffdüsenkopf,
- Fig. 11 eine Kesselanlage, und
- Fig. 12 ein Schema zur Signalerfassung der Harnstoffdosiermenge.

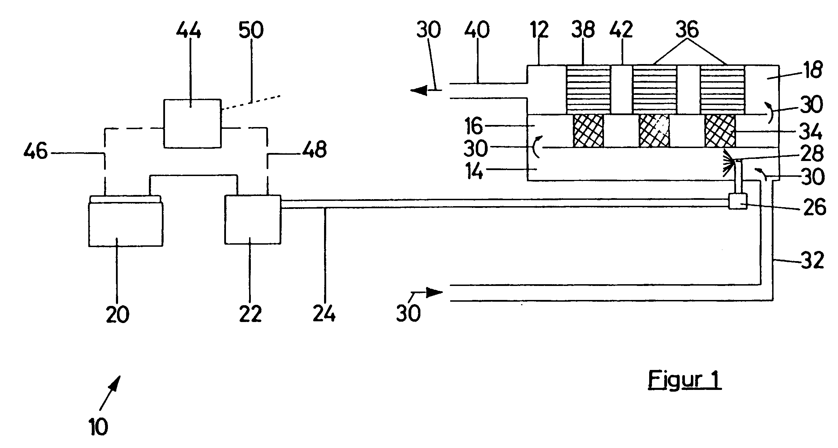

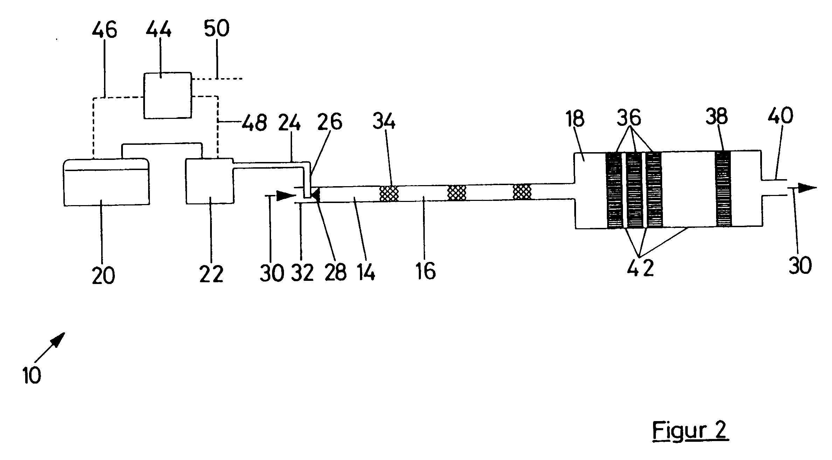

In Fig. 1 ist eine erste kompakte, in Fig. 2 eine zweite gestreckte Variante einer Abgasreinigungsanlage 10 im Ueberblick dargestellt.

In der kompakten Variante gemäss Fig. 1 sind in einem Gehäuse 12 drei Kanäle angeordnet, ein Pyrolysationskanal 14, ein Mischkanal 16 und ein Reaktionskanal 18.

In einer Tankanlage 20 mit einem Reaktionsmitteltank wird ein Harnstoffgranulat eines Korndurchmessers von etwa 2 mm in vorausbestimmter Konzentration in Wasser gelöst und einem Dosiersystem 22 zugeführt. Dieses gibt die wässrige Harnstofflösung, das Reaktionsmittel, mit geringem Förderdruck in einen coaxial in einem Mantelrohr 24 geführten Harnstoffleiter. Ebenfalls im Mantelrohr 24, den Harnstoffleiter umfliessend, wird mit einem Ueberdruck von etwa 1 bar Druckluft zudosiert. Die wässrige Harnstofflösung und die Druckluft werden in einen Zweistoffdüsenapparat 26 geleitet, wo sie aus einer nachstehend im Detail gezeigten Düse austreten und einen aerosolartigen Sprühkegel 28 bilden.

Der Zweistoffdüsenapparat 26 ragt in den Pyrolysationskanal 14, wo die fein versprühte Harnstofflösung in den mit Pfeilen dargestellten heissen Abgasstrom 30 geleitet wird. Die Zuleitung 32 für die rohen Abgase mündet in Fliessrichtung unmittelbar vor dem Zweistoffdüsenapparat 26 in den Pyrolysationskanal 14. Die Pyrolyse, mit andern Worten die Zersetzung des Harnstoffs in Ammoniak und Kohlendioxid, allenfalls unter Bildung von Zyanursäure, erfolgt sofort im Pyrolysationskanal 14 und läuft vollständig ab.Der Abgasstrom 30 mit feinteiligem Ammoniak und Kohlendioxid tritt anschliessend in den Mischkanal 16 über und verläuft in Gegenrichtung durch drei Kreuzstrommischer 34 üblicher Bauart.

Der nun homogen mit dem zersetzten Reaktionsmittel durchmischte Abgasstrom 30 wird in den Reaktionskanal 18 umgeleitet, wo er vorerst durch zwei in Abstand angeordnete Reduktionskatalysatoren 36, dann durch einen ebenfalls in Abstand angeordneten, geometrisch gleich ausgebildeten Oxidationskatalysator 38, welcher unter Verzicht auf den Oxidationsprozess auch ausgebaut sein kann, geführt wird. Der nunmehr von allen gasförmigen Schadstoffen befreite Abgasstrom 30 strömt in einen Wärmetauscher oder tritt über einen Kamin 40 aus.

Bei den gezeichneten Reduktions- und Oxidationskatalysatoren 36, 38 ist angedeutet, dass sie von wabenförmiger Struktur, mit längslaufenden Kanälen ausgestattet, sind. Vor dem ersten Reduktionskatalysator 36 ist ein Lochblech 35 als Strömungsgleichrichter angeordnet. Der Abgasstrom 30 fliesst im Bereich der Kalysatoren 36, 38 laminar, in den Bereichen 42 zwischen den Katalysatoren 36, 38 turbulent. In jeder turbulenten Zone erfolgt eine Nachmischung.

Eine elektrische Anlagesteuerung 44 ist üblicherweise in einem Stahlschrank untergebracht und überwacht und steuert alle Funktionen der Anlage. Die Steuerung ist so konzipiert, dass die Abgasreinigungsanlage 10 vollautomatisch betrieben werden kann und alle Systeme der Abgasreinungsanlage und die Steuerung der abgaserzeugenden Anlage automatisch miteinander kommunizieren. Beispiele sind ein Tankrührwerk, eine Tankheizung, Temperatur- und Druckmessensoren, eine Tankniveausonde, eine Pumpe, ein Magnetventil, ein Regelventil, und ein Regler für die Harnstofflösung, ein Druckluftmagnetventil und ein Düsenluftverdichter.

Das Reaktionsmittelregelventil für die wässrige Harnstofflösung regelt den elektrisch gemessenen Druchfluss-Istwert auf den vorgegebenen Sollwert. Der Reaktionsmittelregler ist eine Mikroprozessorsteuerung für das Regelventil oder eine Dosierpumpe, der abgaserzeugende Motor kann leistungsvariabel gefahren werden. Der Harnstofflösungsfluss wird damit abhängig vom Leistungssignal gemäss einer freiprogrammierten NOₓ-Massenstromkurve gesteuert. Es können vier verschiedene Kurven programmiert und abgerufen werden. Die Steuerung ist vorzugsweise nach Euronorm EN 60204 ausgeführt.

Zum Reinigen von Abgasen aus Dieselmotoren wird eine Harnstoffmassenstrom-Sollwertkurve in Funktion des Motorleistungssignals oder vorzugsweise des elektrischen Generatorleistungssignals programmiert. Die Sollwertkurve, auch Regelkurve genannt, kann aufgrund von Leistungspunkten berechnet und aufgezeichnet werden.

In einem Regler wird der Sollwert mit dem Istwert verglichen und daraus ein Stellsignal für die Harnstoffregelung gebildet. Die Regelung kann durch ein von einer rein gasseitigen NOₓ-Messung stammendes Signal so beeinflusst werden, dass die NOₓ-Werte durch eine geringere, unterstöchiometrische Harnstoffdosierung auf einem konstanten, höheren Niveau gehalten werden, als dies durch die Sollwertkurve möglich wäre. Dadurch wird verhindert, dass bei einer Alterung der SCR-Katalysatoren zuviel Reaktionsmittel eindosiert wird und ein NH₃-Schlupf entsteht. Es ist wichtig, dass das Sollwertsignal aus dem oben erwähnten Regler als übergeordnetes Führungssignal arbeitet, um schnelle Laständerungen des Dieselmotors genügend schnell ausregeln zu können. Die NOₓ-Messung ist dazu zu träge und kann nur untergeordnet verwendet werden.

Die elektrische Anlagesteuerung 44 ist über Leiter mit den erwähnten Anlageteilen verbunden, beispielsweise über einen gestrichelt eingezeichneten Leiter 46 mit der Tankanlage 20 und über einen Leiter 48 mit dem Dosiersystem 22. Stellvertretend für alle übrigen Leiter, die zur elektrischen Anlagesteuerung 44 führen, ist punktiert ein Leiter 50 angedeutet.

Die bereits erwähnte, an sich bekannte Tankanlage 20 umfasst einen Reaktionsmitteltank aus Kunststoff. Eine Auffangschutzwanne verhindert bei einer Undichtheit des Tanks ein Auslaufen der Harnstofflösung. Zur Aufbereitung der wässrigen Harnstofflösung ist der Tank mit einer Wassermessuhr, einem Rührwerk und einer Heizung ausgerüstet. Das Harnstofflösungsniveau wird elektrisch überwacht. Bei grösseren Anlagen ist ein grosser Harnstofflösungs-Lagertank durch ein Transferpumpensystem und einen Harnstofflösungs-Tagestank ergänzt.

Das Dosiersystem 22 für die Harnstofflösung ist bevorzugt in einem geschlossenen Maschinenschrank angeordnet und umfasst folgende Komponenten: Filter, Harnstofflösungspumpe, Druckhalteventil, elektrisches Harnstofflösungsregelventil, Harnstofflösungsdruckmessung` elektrische Harnstofflösungsdurchflussmessung` optische Reaktionsmittelmessung, Magnetventil, Düsenluftverdichter mit Ansaugfilter, Druckluftfilter, Druckmessung, Druckluftdurchflussüberwachung. Die Steuerung kann auch speicherprogrammierbar sein (SPS-Steuerung).

Die hydraulischen und pneumatischen Verbindungen 24 zum Zweistoffdüsenapparat 26 und zur Tankanlage 20 werden durch Schläuche, nichtrostende Stahl- oder Aluminiumrohre hergestellt.

Alle erwähnten Details bezüglich der Tankanlage 20, des Dosiersystems 22 und der elektrischen Anlagesteuerung 44 sind an sich bekannt und werden daher nicht zeichnerisch dargestellt.

Nach der Ausführungsform gemäss Fig. 2 wird der Abgasstrom 30 wie in Fig. 1 in-line durch einen Pyrolysationskanal 14, einen Mischkanal 16 und einen Reaktionskanal 18 geführt. Nach Fig. 2 sind diese Kanäle jedoch nicht kompakt, sondern gestreckt angeordnet. Die Harnstofflösung wir als feinteiliger Spühkegel 28 in Richtung des Abgasstroms 30 in den Pyrolysationskanal 14 gedüst, fliesst über drei Kreuzstrommischer 34 durch den Mischkanal 16 und wird im Reaktionskanal 18 wesentlich grösseren Querschnitts vorerst durch drei Reduktionskatalysatoren 36 dann durch einen Oxidationskatalysator 38 geleitet.

Tankanlage 20, Dosiersystem 22 und elektrische Anlagesteuerung 44 entsprechen Fig. 1.

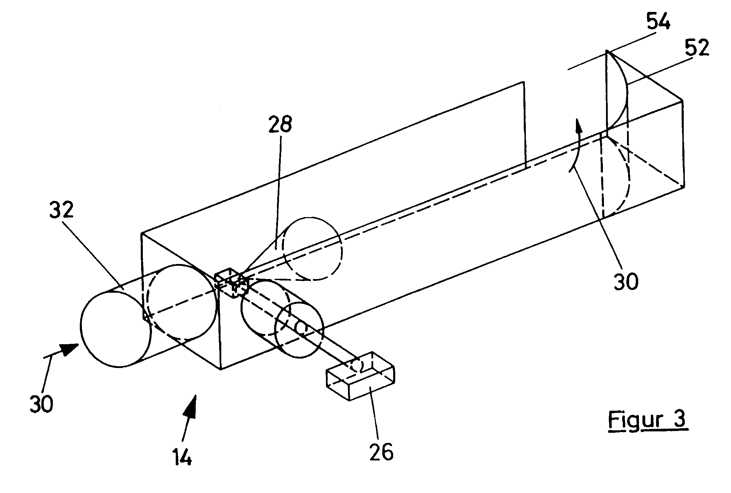

In Fig. 3 wird ein Pyrolysationskanal 14 perspektivisch dargestellt, mit abgehobener Deckfläche. Der Abgasstrom 30 wird über eine Zuleitung 32 stirnseitig eingeleitet. Benachbart dieser Stirnseite ist der Zweistoffdüsenapparat 26 angeflanscht, wobei die Düse in den Innenraum des Pyrolysationskanals 14 ragt. Der Zweistoffdüsenapparat 26 wird später im Detail dargestellt.

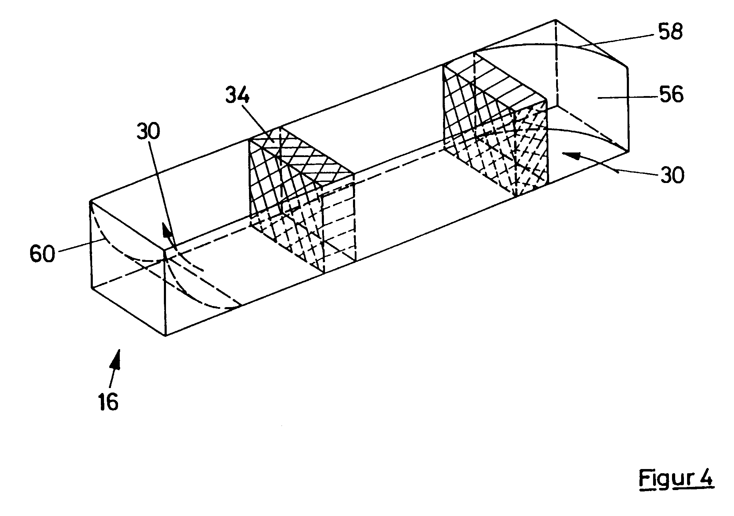

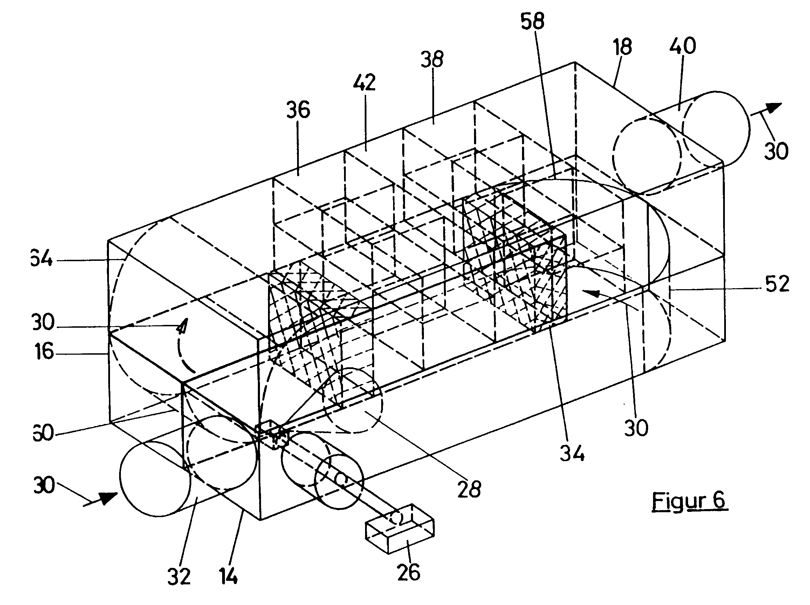

Es wird nochmals gezeigt, dass der Sprühkegel 28 von feinteiliger Harnstofflösung in Richtung des Abgasstroms 30 eingedüst wird. Die Harnstofflösung zersetzt sich, wie oben beschrieben, sofort und vollständig im heissen Abgasstrom 30. An einem Leitblech 52 wird der Abgasstrom 30 in Richtung einer Austrittsöffnung 54 abgelenkt, wie aus Fig. 6 ersichtlich in den in der nächsten Fig. 4 dargestellten Mischkanal 16. Der Gasstrom 30 fliesst über eine Eintrittsöffnung 56, geführt durch ein Leitblech 58, welches mit dem Leitblech 52 gemäss Fig. 3 flächenbündig ist, in den Mischkanal 16. In diesem sind zwei Kreuzstrommischer angeordnet. Der Abgasstrom 30 muss durch die Kreuzstrommischer 34 fliessen und kann nicht den Wänden des Mischkanals 16 entlang durchtreten.

Ueber ein weiteres Leitblech 60 wird der Abgasstrom 30 nach oben umgeleitet. Dieses Leitblech 60 kann wie alle übrigen Leitbleche durch entsprechend wirksame Mittel ersetzt oder weggelassen sein.

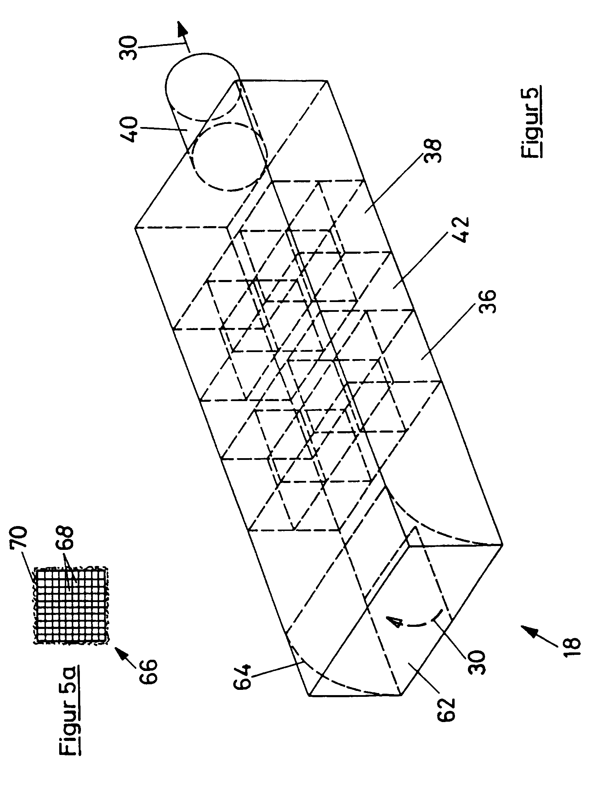

Die oben offenen Pyrolysationskanal 14 und Mischkanal 16 werden durch einen über beide Kanäle gelegten, in Fig. 5 dargestellten Reaktionskanal 18, mit Ausnahme einer Eintrittsöffnung 62, abgedeckt. Mit einem sich über die ganze Breite des Reaktionskanals 18 erstreckenden Leitblech 64 wird der Abgasstrom 30 wieder in die Horizontale umgelenkt und durchfliesst vorerst einen Reduktionskatalysator 36, dann einen Oxidationskatalysator 38. Ueber einen stutzenförmigen Kamin 40 tritt der gereinigte Abgasstrom 30 ins Freie.

Mit gestrichelten Linien ist angedeutet, dass die Katalysatoren 36, 38 modulweise angeordnet sind, sie umfassen im vorliegenden Fall je sechs Wabenkörper. Ein Modul hat beispielsweise einen querschnitt von 150 x 150 mm und ist 50, 150 oder 300 mm lang. Mehrere Wabenkörper können nebeneinander, übereinander und/oder hintereinander angeordnet sein.

Die Längskanäle sind zweckmässig quadratisch ausgebildet, mit einer Seitenlänge von 2 bis 8 mm. Damit kann in den Längskanälen eine laminare Strömung erzeugt werden.

Die Anzahl, Anordnung und Länge der Module werden neben wirtschaftlichen auch durch technische Gegebenheiten bestimmt. Zu grosse Module können zu erheblichen Herstellungsproblemen führen.

In der Reduktionsstufe bestehen die extrudierten Wabenkörper beispielsweise aus Titan-, Wolfram-, oder Vanadiumoxid, oder eine inerte Grundstruktur ist mit wenigstens einem dieser Materialien beschichtet.Neben der Katalysatorzusammensetzung können die Kanalöffnung und Kanalzahl, die Stegbreite und Anzahl Wabenreihen je nach Auslegung variieren.

Die Reaktanden Stickoxid, Ammoniak und Sauerstoff des laminar durch die Längskanäle der Wabenstrukturen fliessenden Abgasstroms 30 gelangen durch Diffusion und Adsorption in die feinporige Struktur der Wabenwände und reagieren dort an den aktiven Zentren durch eine selektiv katalytische Reduktion. Das Reaktionsprodukt ist Wasser, Stickstoff und Kohlendioxid.

Durch Porenverstopfung und/oder Katalysatorgifte, welche die aktiven Zentren zerstören, verliert der Katalysator über eine lange Betriebszeit allmählich seine Aktivität. Beim Erreichen einer minimalen Aktivität werden die Katalysatorwaben ausgewechselt und rezykliert. Der Aktivitätsabfall und der Zeitpunkt der Auswechslung sind berechenbar.

Die Oxidationskatalysatoren 38 bestehen aus extrudierten Wabenkörpern mit keramischer Grundstruktur, in dessen Oberfläche katalytisch aktives Edelmetall, beispielsweise Platin, Rhodium und/oder Palladium, eingebettet ist.Die Geometrie der Wabenkörper und die Art der aktiven Beschichtung können je nach Auslegungsfall gewählt werden.

Im Gegensatz zum selektiven Reduktionsvorgang verläuft die Oxidation ohne ein zusätzliches Reaktionsmittel. Der Oxidationskatalysator bewirkt, dass die oxidierbaren gasförmigen Abgasschadstoffe auch bei sehr geringer Konzentration und weit unter der Selbstentzündungstemperatur flammenlos verbrennen. Für diesen Oxidationsvorgang ist es erforderlich, dass im Abgas ein minimaler Anteil von Restsauerstoff vorhanden ist. Reaktionsprodukte der Oxidation sind Kohlendioxid und Wasser.

Der Stofftransport der zu oxidierenden Gasmoleküle vom längslaufenden Wabenkanal in die aktive Beschichtung erfolgt wie beim selektiven katalytischen Reduktionskatalysator durch Diffusion, bewirkt durch die Konzentrationsabnahme im Bereich der aktiven Beschichtung.

Auch der Oxidationskatalysator unterliegt einer Alterung, durch Katalysatorgifte und Belegungen verliert er allmählich seine Aktivität. Nach dem Erreichen einer minimalen Aktivität werden die Katalysatorwaben ausgewechselt und rezykliert.

Fig. 5a zeigt eine stirnseitige Ansicht eines Wabenkörpers 66, welcher als Modul für Reduktions- oder Oxidationskatalysatoren 36, 38 bezeichnet wird.Die quadatrischen Längskanäle 68 haben, je nach Anzahl pro Modulquerschnittsfläche, eine lichte Weite von 4 bis 64 mm², im vorliegenden Fall 15 mm².

Der Wabenkörper 66 ist etwa längsbündig von einem elastischen Strumpf 70 aus gestrickten oder gewobenen Glasfasern umhüllt. Dieser Strumpf 70 dient einerseits dem Schutz gegen Stösse und dichtet andrerseits die aneinanderliegenden Wabenkörper 66 ab, was verhindert, dass der Abgasstrom 30 neben den Waben- bzw. Längskanälen 68 durchfliessen kann.

Nach weiteren Varianten können z.B. der Pyrolysekanal 14 und der Mischkanal 16 gestreckt angeordnet sein, dann der Abgasstrom 30 in einen auf dem Mischkanal 16 liegenden Reaktionskanal umgeleitet werden (halbkompakt). Weiter können in einer kompakten Ausführungsform der Pyrolysationskanal 14 oben und der Reaktionskanal 18 unten angeordnet sein. Ein Teil oder alle Kanäle können in einer andern Richtung als horizontal, z.B. vertikal, verlaufen. Der Eintritt des Abgasstromes 30 kann rechts oder links, oben oder unten, erfolgen, ebenso der Austritt der gereinigten Abgase.

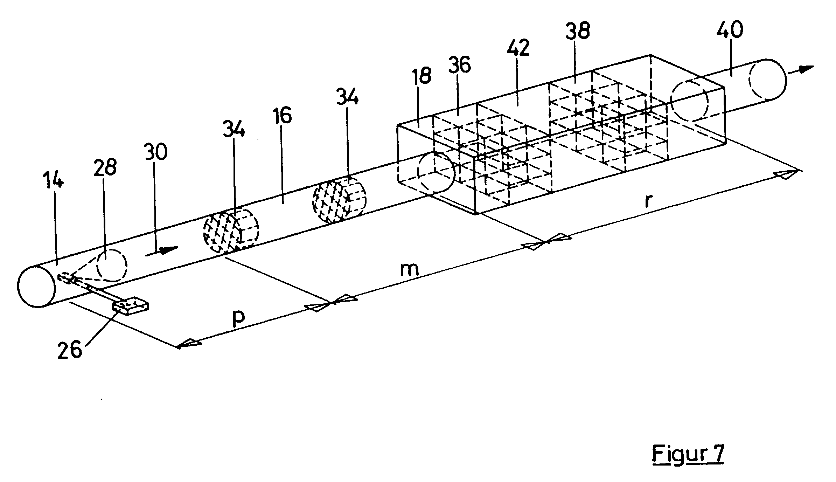

Die Ausführungsform gemäss Fig.7 entspricht im wesentlichen derjenigen von Fig. 6, jedoch sind Pyrolysationskanal 14, Mischkanal 16 und Reaktionskanal 18 nicht kompakt, sondern gestreckt angeordnet. Mit p ist die Pyrolysationsstrecke, mit m die Mischstrecke und mit r die Reaktionsstrecke bezeichnet.

Dem Pyrolysationskanal 14 mit dem Zweistoffdüsenapparat 26 kann noch, wie bei allen andern Ausführungsformen, ein nicht dargestellter Russfilter, beispielsweise aus Aluminiumoxid, Glas- oder Keramikfasern vorgeschaltet sein.

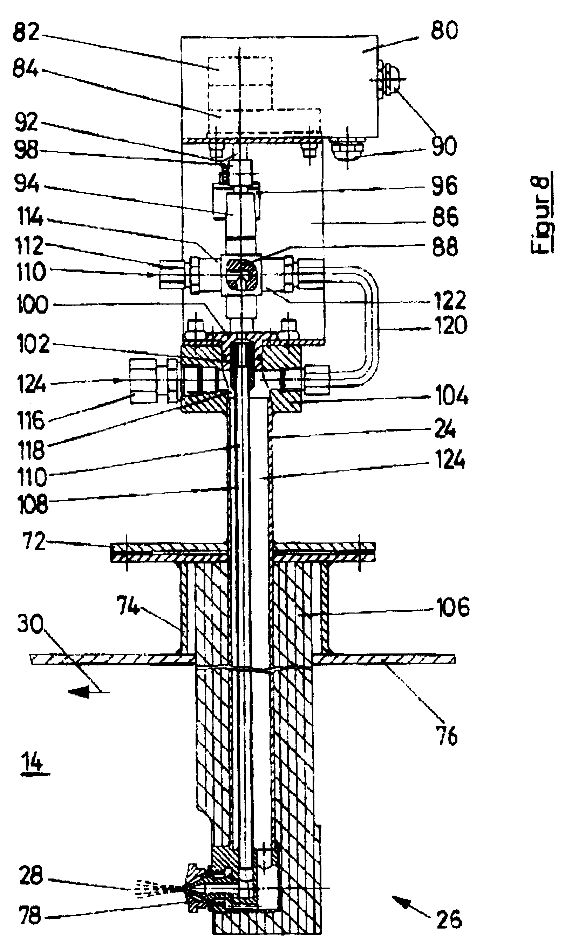

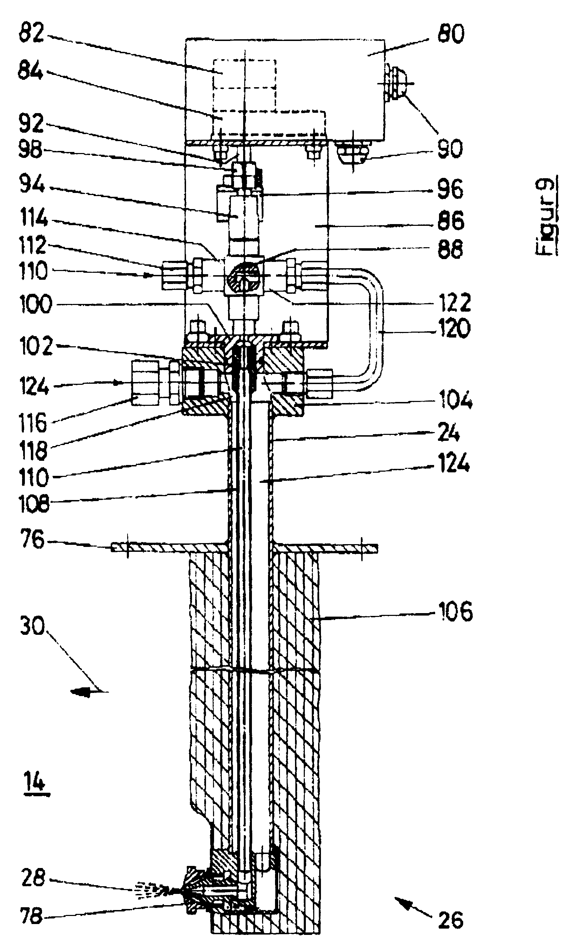

Fig. 8 zeigt einen Zweistoffdüsenapparat 26, welcher direkt (Fig. 9) oder über einen Flansch 72 und einen Haltestutzen 74 mit der Wand 76 des Pyrolysationskanals 14 (Fig. 1, 2) verbunden ist.

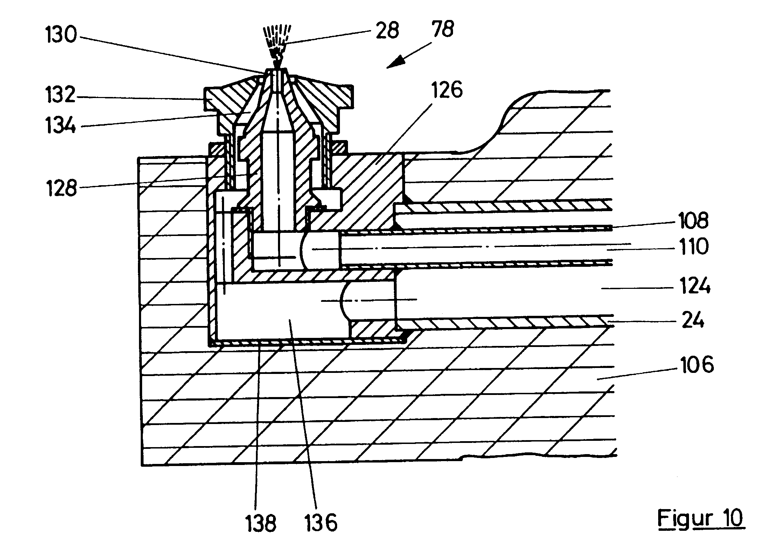

Eine zweiteilige Düse 78 mit dem angedeuteten Sprühkegel 28 ist in Fig. 10 im Detail dargestellt.

Ein demontierbarer Ventilteil gemäss Fig. 8, 9 umfasst im wesentlichen ein Motorgehäuse 80 mit einem Stellmotor 82, ein Synchronmotor, und einem Stellgetriebe 84 und ein Ventilgehäuse 86 mit einem Dreiwegekugelventil 88 mit entsprechenden Zuleitungen.

Die nicht dargestellten elektrischen Leiter werden über Kabelstopfverschraubungen 90 zugeführt. Der Stellmotor 82 wirkt über eine Motorwelle 92 und eine Kupplung 94, ausgerüstet mit Kontakthebel 96 und Endschalter 98, auf das Dreiwegekugelventil 88.

Mit dem Ventilgehäuse 86 verschraubt ist ein Halteflansch 100 mit coaxialem Rohrhalter 102 und Stützring 104. Halteflansch 100, Rohrhalter 102 und Stützring 104 sind jeweils mit O-Ringen gegeneinander abgedichtet.

Mit dem Stützring 104 verschweisst ist das mit dem Flansch 72 oder der Wand 76 des Pyrolysationskanals verbundene Mantelrohr 24, welches bis in den Bereich der Düse 78 führt. Das Mantelrohr 24 ist im vorliegenden Fall wenigstens im Bereich des heissen Abgasstroms 30 von einer Isolationsschicht 106 umhüllt, welche im Bereich der Düse 78 abgetragen ist. Die Isolationsschicht 106 kann teilweise oder vollständig fehlen.

Im Innern des Mantelrohrs 24 ist in Abstand der im Rohrhalter 102 befestigte Harnstoffleiter 108 geführt, vorzugsweise coaxial.

Die Harnstofflösung 110 wird über eine Verschraubung 112 und über einen zum Dreiwegekugelventil 88 führenden Stutzen 114 mit kleinem Förderdruck zugeführt.

Die Druckluft 124 wird über einen Schraubenanschluss 116 zugeführt, welcher zu einem Hohlraum 118 im Stützring 104 führt. Ueber eine Druckluftleitung 120 ist dieser Hohlraum 118 mit einem Stutzen 122 verbunden, welcher dem Zuflussstutzen 114 für die Harnstofflösung in bezug auf den Dreiwegehahn diametral gegenüberliegt.

Fig. 8 zeigt das Dreiwegekugelventil 88 in Arbeitsstellung, es ist in Richtung der zufliessenden Harnstofflösung 110 offen. Die Harnstofflösung 110 kann in Richtung des Rohrhalters 102 fliessen und über den Harnstoffleiter 108 zur Düse 78 weitergeleitet werden. Die Druckluft 124 fliesst in den Hohlraum 118 und dort, den Harnstoffleiter 108 als Kühlmedium stets umhüllend, im Mantelrohr 24 zur Düse 78. Durch die Druckluftleitung 120 kann keine Luft fliessen, weil das Dreiwegekugelventil 88 geschlossen ist.

Gemäss Fig. 9 ist das Dreiwegekugelventil 88 in Ausblasstellung. Die Zuleitung von Harnstofflösung 110 ist unterbrochen, die Druckluft 124 kann nun über die Druckluftleitung 120 und das Dreiwegekugelventil 88 in den Harnstoffleiter 108 fliessen und diesen ausblasen.

In Fig. 10 dargestellte Düse 78 umfasst einen in einen Düsenkopf 126 eingeschraubten Düsenkörper 128 mit einer sich verengenden Austrittsöffnung 130 für die Harnstofflösung 110. Ueber den Düsenkörper 128 ist eine Düsenkappe 132 aufgeschraubt, welche Düsenteile Austrittskanäle 134 für die Druckluft 124 bilden. Die austretende Druckluft bewirkt durch Injektorwirkung eine aerosolartige Zerstäubung der wässrigen Harnstofflösung.

Unter der Düse 78 ist ein durch einen Düsenkopfdeckel 138 begrenzter Luftraum 136 gebildet, welcher sich in Richtung der Austrittskanäle 134 fortsetzt und mit geeigneten Mitteln abgedichtet ist.

Im Bereich der Austrittkanäle 134 kann durch Schrägrinnen, Schrägkanäle oder andere bekannte Mittel eine Rotationsbewegung der austretenden Druckluft 124 bewirkt werden.

Kann eine Verstopfung der Düse 78 und/oder des Harnstoffleiters nicht mit Anwendung von Druckluft 124 ausgeblasen werden, so werden zur mechanischen Reinigung die Düsenkappe 132, allenfalls der Düsenkörper 128 und wenn notwendig auch der Ventilteil vom Halteflansch 100 abgeschraubt.

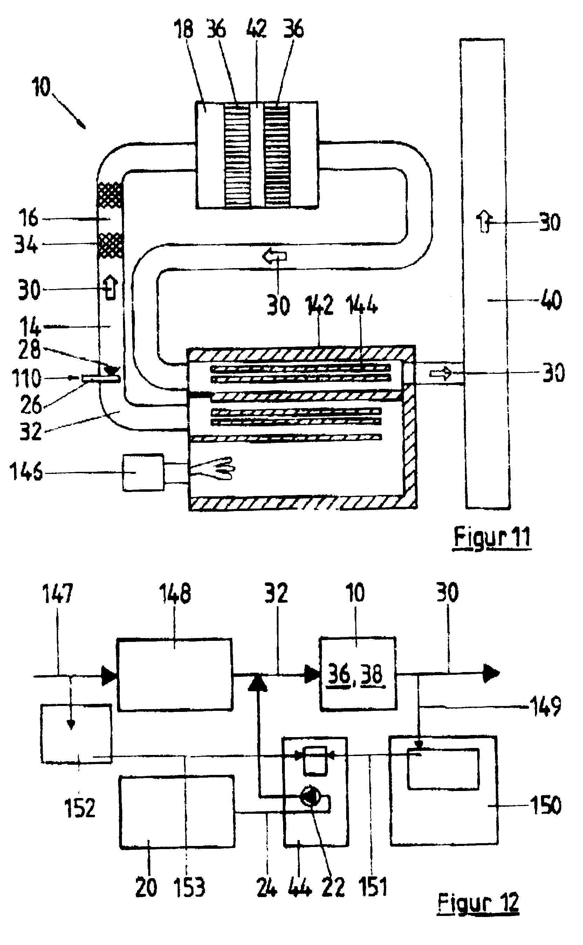

Fig. 11 zeigt eine Kesseleinheit 140 mit ausserhalb des Kesselkörpers 142 aufgebauter Abgasreinigungsanlage 10, welche im wesentlichen einem Pyrolysationskanal 14 mit einem Zweistoffdüsenapparat 26, einen Mischkanal 16 und einen Reaktionskanal 18 ohne Oxidationskatalysator umfasst. Der von gasförmigen Schadstoffen befreite Abgasstrom 30 wird durch den Kesselkörper 142 mit einem Wärmetauscher 144 in einen Kamin 40 geleitet. Zur Abscheidung von im Abgasstrom 30 schwebenden feinkörnigen Partikeln kann der Abgasstrom vorgängig durch einen nicht gezeichneten Zyklon oder dgl. geleitet werden.

Beim Betrieb von Kessel- oder anderen Verbrennungseinheiten mit schwefelhaltigen Brennstoffen, z.B. Schweröl, müssen vom Schwefelgehalt abhängige minimale Betriebstemperaturen eingehalten werden. Bei zu tiefen Temperaturen wird Ammoniumsulfat gebildet, was einerseits den Katalysator mit einer klebrigen, zähflüssigen Schicht belegt und andererseits hochgradig korrosiv ist. Es sind folgende Minimaltermperaturen ermittelt worden, welche durch eine geeignete Brennereinheit 146, durch Wärmetauscher und/oder Positionierung der Abgasreinigungsanlage 10, ausserhalb oder auch innerhalb des Kesselkörpers 142, erreicht werden:
0,05 Gew.-% Schwefel = 513°K
0,15 Gew.-% Schwefel = 533°K
0,3 Gew.-% Schwefel = 553°K
0,5 Gew.-% Schwefel = 563°K
1 Gew.-% Schwefel = 573°K
1,5 Gew.-% Schwefel = 613°K
2 Gew.-% Schwefel = 623°K
3 Gew.-% Schwefel = 693°K
4 Gew.-% Schwefel = 713°K
Die Minimaltemperaturen können auch durch Beimischung von heisseren Abgasen aus dem Kessel, vor der Katalysatoreinbindung, angehoben werden. Der beigemischte Abgasstrom soll dabei immer kleiner oder höchstens gleich gross sein als der Hauptabgasstrom. Der Abgasstrom kann durch eine motorisch angetriebene Klappe kontinuierlich geregelt werden. Die Temperaturerfassung kann durch einen Thermostaten erfolgen, welcher ein Signal an den Regler abgibt.

In Fig. 12 ist ein Schema der Signalerfassung der Harnstoffdosiermenge dargestellt. Mit einem Pfeil dargestellt wird Brennstoff 147 zu einer Verbrennungsanlage 148 geführt. Ueber eine Zuleitung 32 werden die ungereinigten Abgase zu einer Abgasreinigungsanlage 10 mit einem Reduktionskatalysator 36 oder einem Reduktions- und Oxidationskatalysator 38 geleitet, aus dieser Anlage tritt der von gasförmigen Schadstoffen gereinigte Abgasstrom 30 aus. Aus einer in Fig. 1 näher dargestellten Tankanlage 20 wird das Reaktionsmittel über einen Regler, der elektrischen Anlagesteuerung 44, mit einem Dosiersystem 22 und ein Mantelrohr 24 in die Abgasreinigungsanlage 10 geführt.

Die von der elektrischen Anlagesteuerung 44 abgegebenen Regelsignale bzw. deren Leiter sind nicht angegeben, sie können Fig. 1 und 2 entnommen werden.

Bei festem Brennstoffen 147 zweigt zur chemisch/physikalischen Analyse vom zu einem Wärmetauscher oder einem Kamin führenden Rohr mit dem gereinigten Abgasstrom 30 eine Zuleitung 149 zu einem Gasanalysegerät 150 ab. Dieses erzeugt auf an sich bekannte Weise Signale, welche über einen elektrischen Leiter 151 in die elektrische Anlagesteuerung 44 geleitet werden.

Bei flüssigen oder gasförmigen Brennstoffen 147 wird dieser mit einem physikalischen Messgerät 152 erfasst, welches ebenfalls Signale erzeugt und über einen weiteren elektrischen Leiter 153 an die elektrische Anlagesteuerung 44, den Regler, abgibt.

Da die Minderung von Stickoxiden im Abgas 30 von Verbrennungsanlagen 148 mit Sauerstoffüberschuss nur durch die dosierte Zugabe von wässriger Harnstofflösung 110 (Fig. 8,9) erfolgt, ist der Sollwert der Zugabemenge zu erfassen. Der Wirkungsgrad der Abgasreinigungsanlage 10 ist abhängig von der genauen Erfassung des Eingangssignals der aus dem Abgasstrom 30 zu eliminierenden schädlichen Gase. Erfolgt die Erfassung durch ein Gasanalyse-Messgerät 150, welches das schädliche Gas misst, wird der Wirkungsgrad der Abgasreinigungsanlage 10 hauptsächlich von Wer Messfehlergenaugkeit dieses Messgerätes und seiner zeitlichen Konstanz bestimmt. Bei der Gasanalyse sind zur genauen chemischen und physikalischen Definition des Istwertes mehrere Zustandsparameter des Einzelgases sowie deren Querempfindlichkeit zu weiteren Einzelgasen und der physikalischen Grössen zu bestimmen.

Bei öl- oder gasbefeuerten Verbrennungsanlagen 148 sind die Brennstoffbestandteile weitgehend konstant und damit direkt proportional zu ihrem Abgaskomponenten.Der Sollwert für die Zugabe des Reduktionsmittels, der wässrigen Harnstofflösung, kann aufgrund der vom physikalischen Messgerät 152 übermittelten Signale erfolgen, das Gasanalyse-Messgerät 150 ist nicht notwendig.

Erfolgt die Erfassung über das physikalische Messgerät 152 mittels eines Zählers oder eines Potentiometers, so kann das erfasste Signal als Istwert für die Zugabe der wässrigen Harnstofflösung verwendet werden. Das Istwertsignal kann direkt oder mit einem elektrischen Wandler als 0 - 20 mA oder 4 - 20 mA-Signal auf die elektrische Anlagesteuerung 44 oder auf ein nicht dargestelltes Stellglied übertragen werden. Ohne Nacheichung sollte die Fehlergrenze nach einem halben Jahr nicht mehr als +/- 2% betragen.

Die Abhängigkeit der Entwicklung schädlicher Gase von nicht brenntstoffgebundenen Istwerten wird durch periodische Gasanalysemessung erfasst. Durch Eingabe einer Kurvenschar der so erfassten Regelparameter in die elektrische Anlagesteuerung 44 kann ein Stellglied angesteuert werden.

Die Brennstoffdaten und brennstoffunabhängigen Daten werden wie beschrieben erfasst und der Regelanlage 44 zugeführt, welche auf Stellglieder einwirkt. Die elektrischen Signale können statt der Regelanlage 44 direkt eine stetig geregelte Pumpe ansteuern und dort als Sollwert eingehen. Einem Istwertsignal kann auch zusätzlich ein Gasanalysesignal aufadaptiert werden.

Feste Brennstoffe haben schwankende Brennstoffbestandteile. Sie werden in Verbrennungsanlagen 148 mit grossen Feuerräumen verbrannt. Das Einbringen des Feststoffes und der Abbrand ist kaum oder nicht homogen zu gestalten. Entsprechend der schwankenden Brennstoffzusammensetzung ist auch die Menge von schädlichen Komponenten im Abgasstrom variabel. Die Brennstoffmenge ist deshalb als Istwertsignal für den Reaktionsmittelfluss nicht geeignet. Als konstantes Signal wird der Volumenstrom der Verbrennungsluft als physikalische Grösse erfasst. Das physikalische Messgerät 152 sowie ein kontinuierlich messendes Gasanalysegerät 150 erfassen den Stickoxidgehalt in ppm. Beide Signale werden über einen Rechner als Stickoxidmassenstrom erfasst und über ein Analogsignal 0 bis 20 mA oder 4 bis 20 mA als Istwert für die Dosierung von wässriger Harnstofflösung verwendet.

## Patentansprüche

1. Verfahren zum Reinigen von Abgasen aus Verbrennungsanlagen für flüsssige, gasförmige oder feste Brennstoffe, durch Druckluft-Eindüsung einer wässrigen Harnstofflösung (110) in den heissen Abgasstrom (30), wo sich der eingedüste Harnstoff zersetzt und mit den schädlichen, gasförmigen Abgaskomponenten eine wenigstenseinstufige, katalytische Reduktion eingeht, Wobei die zudosierte wässrige Harnstofflösung (110) luftgekühlt zur Austrittsöffnung (130) der Düse (78) geleitet, dort fein versprüht in einen Pyrolysationskanal (14) gedüst, durch in einem Mischkanal (16) angeordnete in-line-Mischer (34) homogen gemischt und in einem Reaktionskanal (18) ohne vorgeschalteten Hydrolysekatalysator die reduzierbaren Abgaskomponenten in mindestens einem selektiven, nicht zeolithhaltigen Reduktionskatalysator (36) reduziert und die oxidierbaren Abgaskomponenten ohne Reaktionsmittel in mindestens einem Oxidationskatalysator (38) zur Reaktion gebracht werden,
dadurch gekennzeichnet, dass
bei einem Druckanstieg im luftgekühlten Harnstoffleiter (108) für die Harnstofflösung (110) und/oder in einem Mantelrohr (24) für die kühlende Druckluft (124) wegen einem Verstopfen der Düse (78) ein Dreiwegekugelventil prozessgesteuert von einer Arbeits- in eine Ausblasstellung umgeschaltet und die im Normalbetrieb durch das Mantelrohr (24) geführte Druckluft (124) in den Harnstoffleiter (108) umgeleitet sowie die Harnstofflösung (110) ausgeschaltet wird, bis der Druck auf den Normalwert absinkt und das Dreiwegekugelventil von der Ausblas- in die Arbeitsstellung zurückschaltet.

2. Verfahren nach Anspruch 1, dadurch gekennzeichnet, dass die wässrige Harnstofflösung (110) mit Förderdruck, bei einem Luftzuschuss mit 0,2 bis 8 bar, insbesondere 0,5 bis 6 bar, Ueberdruck, in den vorzugsweise mit 15 bis 60 m/sec fliessenden Abgasstrom (30) gedüst wird.

3. Verfahren nach Anspruch 1 oder 2, dadurch gekennzeichnet, dass die wässrige Harnstofflösung (110) vor dem Versprühen mit der Druckluft (124) auf einer Flüssigkeitstemperatur von höchstens 100°C gehalten wird.

4. Verfahren nach einem der Ansprüche 1 bis 3, dadurch gekennzeichnet, dass die wässrige Harnstofflösung (110) nach dem Versprühen durch die Druckluft (124) rotiert wird.

5. Verfahren nach einem der Ansprüche 1 bis 4, dadurch gekennzeichnet, dass die wässrige Harnstofflösung (110) in bezug auf den zu reduzierenden NOₓ-Massenstrom vollautomatisch exakt stöchiometrisch zudosiert wird.

6. Verfahren nach einem der Ansprüche 1 bis 5, dadurch gekennzeichnet, dass der mit zerstäubter wässriger Harnstofflösung (110) homogen gemischte Abgasstrom (30) im Bereich des Reaktionskanals (18) alternierend in Längskanälen (68) von Katalysatoren (36, 38) laminar und in den zwischen Katalysatoren liegenden freien Zwischenräumen (42) turbulent geführt wird.

7. Verfahren nach einem der Ansprüche 1 bis 6, dadurch gekennzeichnet, dass die Oxidationskatalysatoren (38) in bezug auf die CO-, HC-und/oder SO₂-Komponenten selektiv einwirken.

8. Verfahren nach einem der Ansprüche 1 bis 7, dadurch gekennzeichnet, dass bei Reaktionsbeginn nur Druckluft (124) eingeblasen, dann die wässrige Harnstofflösung (110) zugeschaltet, und beim Reaktionsende die wässrige Harnstofflösung (110) ausgeschaltet, dann der Harnstoffleiter (108) und die Düse (78) ausgeblasen wird.

9. Abgasreinigungsanlage (10) mit einem Reaktionsmitteltank (20), einer Dosier- (22), Zuleitungs- und Versprühungseinrichtung für die wässrige Harnstofflösung (110) und einer elektrischen Anlagesteuerung und -regelung (44) zur Durchführung des Verfahrens nach einem der Ansprüche 1 bis 8, wobei
- die Anlage einen Pyrolysationskanal (14), einen Mischkanal (16) und einen Reaktionskanal (18) aufweist, welche räumlich getrennt sind,
- die Zuleitungseinrichtung als Zweistoffdüsenapparat (26) mit einem äusseren Mantelrohr (24) für die Druckluft (124) und einem in Abstand angeordneten inneren Harnstoffleiter (108) ausgebildet ist und in den Pyrolysationskanal (14) ragt, und eine Düse (78) zum feinteiligen Versprühen der wässrigen Harnstofflösung (110) umfasst,
- im Mischkanal (16) wenigstens zwei in Abstand voneinander angeordnete Kreuzstrommischer (34) eingebaut sind, und
- im Reaktionskanal (18) in Richtung des Abgasstromes (30) wenigstens zwei hintereinander liegende, modulartig aufgebaute, wabenförmig mit Längskanälen (68) ausgebildete Reduktionskatalysatoren (36) undwenigstens ein Oxidationskatalysator (38) eingebaut sind,
dadurch gekennzeichnet, dass
der Zweistoffdüsenapparat (26) ein Ventilgehäuse (86) mit einem elektronisch gesteuert betätigbaren Dreiwegekugelventil (88) eingeschlossen entsprechenden Zuleitungen umfasst, nämlich einen Stutzen (114) für die Zufuhr von Harnstofflösung (110), eine diagonal gegenüberliegende Druckluftleitung (120) und eine zum Harnstoffleiter (108) führende Durchflussöffnung in einem Rohrhalter (102).

10. Abgasreinigungsanlage (10) nach Anspruch 9, dadurch gekennzeichnet, dass die Düse (78) des Zweistoffdüsenapparats (26) zur Verleihung von Drall Schrägschlitze und/oder -kanäle zur Rotation der Druckluft (124) aufweist.

11. Abgasreinigungsanlage (10) nach einem der Ansprüche 9 oder 10, dadurch gekennzeichnet, dass Pyrolysationskanal (14), Mischkanal (16) und Reaktionskanal (18), quaderförmig neben- und/oder übereinanderliegend ausgebildet sind, wobei korrespondierende Oeffnungen (54,56:62) mit Leitblechen (52,60,64) für den Gasstrom (30) ausgebildet sind.

12. Abgasreinigungsanlage (10) nach einem der Ansprüche 9 oder 10, dadurch gekennzeichnet, dass die im Reaktionskanal (18) eingebauten Reduktions- und Oxidationskatalysatoren (36, 38) Wabenkörper (66) mit insbesondere quadratischem, rechteckigem oder hexagonalem Querschnitt sind, wobei vor dem ersten Reduktionskatalysator (36) vorzugsweise ein Lochblech (35) als Strömungsgleichrichter angeordnet ist.

13. Abgasreinigungsanlage (10) nach Anspruch 12, dadurch gekennzeichnet, dass die modulartig aufgebauten Wabenkörper (66) mit mehreren Modulen eines Querschnitts von vorzugsweise etwa 150 x 150 mm und einer Länge von 50, 150 oder 300 mm, nebeneinander, übereinander und/oder hintereinander, gestossen oder in Abstand, angeordnet sind.

14. Abgasreinigungsanlage (10) nach einem der Ansprüche 9 - 13, dadurch gekennzeichnet, dass die Wabenkörper (66) längsseitig mit einem elastischen, etwa bündigen Strumpf (70) aus feuerfestem Material, vorzugsweise aus ei nem Glasfasergestrick, abgedeckt sind.

15. Abgasreinigungsanlage (10) nach einem der Ansprüche 9 - 14, dadurch gekennzeichnet, dass wenigstens die aktive Fläche der Reduktionskatalysatoren (36) aus Titan-, Wolfram- und/oder Vanadiumoxid besteht, wenigstens die aktive Oberfläche der Oxidationskatalysatoren (38) aus einem edlen Metall, vorzugsweise aus Platin, Rhodium und/oder Palladium.

## Claims

1. Process for cleaning exhaust gases from combustion installations for liquid, gaseous or solid fuels, by compressed air injection of an aqueous urea solution (110) into the hot exhaust gas flow (30), where the injected urea decomposes and enters into a catalytic reduction of at least one stage with the harmful gaseous exhaust gas components, where the added aqueous urea solution (110) is air-cooled and passed to the outlet opening (130) of the nozzle (78), where it is finely atomised and injected into a pyrolysation channel (14), mixed homogeneously by an in-line mixer (34) arranged in a mixing channel (16), and, in a reaction channel (18) without pre-connected hydrolysis catalyst, the reducible exhaust gas components are reduced in at least one selective non-zeolite-containing reduction catalyst (36) and the oxidisable exhaust gas components brought to reaction without reagent in at least one oxidation catalyst (38),
characterised in that
when the pressure increases in an air-cooled urea line (108) for the urea solution (110) and/or in a casing tube (24) for the cooling compressed air (124), caused by blocking of the nozzle (78), a three-way ball valve under process control switches from a working position into a blow-out position and the compressed air (124) guided in normal operation through the casing tube (24) is diverted into the urea line (108), and the urea solution (110) is disconnected until the pressure falls to the normal value and the three-way ball valve switches back from the blow-out to the working position.

2. Process according to claim 1, characterised in that the aqueous urea solution (110) is injected under feed pressure, with an air supply at a positive pressure of 0.2 to 8 bar, in particular 0.5 to 6 bar, into the exhaust gas flow (30) preferably flowing at 15 to 60 m/s.

3. Process according to claim 1 or 2, characterised in that the aqueous urea solution (110) is held at a maximum fluid temperature of 100°C before atomisation with compressed air (124).

4. Process according to any of claims 1 to 3, characterised in that the aqueous urea solution (110) after atomisation is rotated by compressed air (124).

5. Process according to any of claims 1 to 4, characterised in that the aqueous urea solution (110) is added automatically exactly stoichiometrically in relation to the mass NOx flow to be reduced.

6. Process according to any of claims 1 to 5, characterized in that the exhaust gas flow (30), homogeneously mixed with the atomised aqueous urea solution (110) in the area of the reaction channel (18), is supplied alternately laminar in the longitudinal channels (68) of catalysts (36, 38), and turbulent in the clear spaces (42) between the catalysts.

7. Process according to any of claims 1 to 6, characterised in that the oxidation catalysts (38) act selectively in relation to the CO, HC and/or SO₂ components.

8. Process according to any of claims 1 to 7, characterized in that when the reaction begins, only compressed air (124) is blown in, then the aqueous urea solution (110) is connected and when the reaction ends, the aqueous urea solution (110) is disconnected, then the urea line (108) and nozzle (78) are blown through.

9. Exhaust gas cleaning system (10) with a reagent tank (20), a metering (22), supply and atomisation device for the aqueous urea solution (110) and an electrical system control and regulation device (44) for performance of the process according to any of claims 1 to 8, where
- the system has a pyrolysation channel (14), a mixing channel (16) and a reaction channel (18) which are physically separated,
- the supply device is arranged as a two-substance nozzle device (26) with an outer sheathed pipe (24) for the compressed air (124) and an inner urea line (108) arranged with a spacing, and said supply device projects into the pyrolysation channel (14), and comprises a nozzle (78) for fine-particle atomisation of the aqueous urea solution (110),
- integrated in the mixing channel (16) are at least two cross-flow mixers (34) arranged at a distance apart, and
- integrated in the reaction channel (18) in the direction of the exhaust gas flow (30) are at least two modular structure reduction catalysts (36) lying one behind the other and formed in honeycomb shape with longitudinal channels (68), and at least one oxidation catalyst (38),
characterised in that
the two-substance nozzle apparatus (26) comprises a valve housing (86) with supply lines corresponding to an enclosed three-way ball valve (88) which can be operated by electronic control, namely a connector (114) for the supply of urea solution (110), a diagonally opposite compressed air line (120) and a flow opening in a pipe holder (102) leading to the urea line (108).

10. Exhaust gas cleaning system (10) according to claim 9, characterised in that the nozzle (78) of the two-substance nozzle device (26) has angled slots and/or channels to twist and rotate the compressed air (124).

11. Exhaust gas cleaning system (10) according to claim 9 or claim 10, characterised in that the pyrolysation channel (14), mixer channel (16) and reaction channel (18) are arranged in a rectangular shape next to and/or above each other, where corresponding openings (54, 56; 62) are formed with guide plates (52, 60, 64) for the gas flow (30).

12. Exhaust gas cleaning system (10) according to claims 9 or claim 10, characterised in that the reduction and oxidation catalysts (36, 38) incorporated in the reaction channel (18) are honeycomb bodies (66) with in particular square, rectangular or hexagonal cross-section, where before the first reduction catalyst (36) is arranged preferably a perforated plate (35) as a flow rectifier.

13. Exhaust gas cleaning system (10) according to claim 12, characterised in that the modular honeycomb bodies (66) with several modules of cross-section preferably approximately 150 x 150 mm and length 50, 150 or 300 mm, are arranged next to each other, above each other and/or behind each other, in contact or with a spacing.

14. Exhaust gas cleaning system (10) according to any of claims 9 to 13, characterised in that the honeycomb bodies (66) are covered longitudinally with an elastic, approximately flush, stocking (70) of fire-resistant material, preferably a glass fibre knitted fabric.

15. Exhaust gas cleaning system (10) according to any of claims 9 to 14, characterised in that at least the active surface of the reduction catalysts (36) consists of titanium, tungsten and or vanadium oxide, and at least the active surface of the oxidation catalysts (38) consists of a precious metal, preferably platinum, rhodium and/or palladium.

## Revendications

1. Procédé de purification d'effluents gazeux provenant d'installations de combustion pour des combustibles liquides, gazeux ou solides, par injection avec de l'air comprimé d'une solution aqueuse d'urée (110) dans le courant chaud des effluents gazeux (30), dans lequel l'urée injectée se décompose et donne naissance à une réduction catalytique en au moins une étape avec les constituants gazeux nocifs des effluents gazeux, où la solution aqueuse durée à doser (110) refroidie à l'air est dirigée vers l'ouverture de sortie (130) de la buse (78), et est là injectée sous forme finement pulvérisée dans un canal de pyrolyse (14), est mélangée de façon homogène par l'intermédiaire de mélangeurs en ligne (34) disposés dans un canal de mélange (16), et les constituants des effluents gazeux pouvant être réduits sont réduits dans au moins un catalyseur de réduction (36) sélectif ne contenant pas de zéolite, dans un canal de réaction (18) sans catalyseur d'hydrolyse disposé en amont et les constituants des effluents gazeux pouvant être oxydés sont amenés sans agent de réaction dans au moins un catalyseur d'oxydation (38) pour la réaction, caractérisé en ce que, lors d'une montée de la pression dans le porteur d'urée (108) pour la solution d'urée (110) et/ou dans un tube d'enveloppe (24) pour l'air comprimé de refroidissement (124) à cause d'un colmatage de la buse (78), une vanne à bille trois voies est amenée à passer d'une position de fonctionnement à une position de purge en étant commandée par le processus et l'air comprimé (124) amené en fonctionnement normal à traverser le tube d'enveloppe (24) est dévié dans le porteur durée (108) et la solution d'urée (110) et mise hors circuit, jusqu'à ce que la pression baisse à la valeur normale et la vanne à bille trois voies soit ramenée de la position de purge à la position de fonctionnement.

2. Procédé selon la revendication 1, caractérisé en ce qu'on injecte la solution aqueuse d'urée (110) avec une pression de refoulement, pour un supplément d'air présentant une surpression de 0,2 à 8 bars, en particulier de 0,5 à 6 bars, dans le courant des effluents gazeux s'écoulant de préférence à une vitesse de 15 à 60m/s.

3. Procédé selon la revendication 1 ou 2, caractérisé en ce qu'on maintient la solution aqueuse d'urée (110) à une température de liquide d'au plus 100°C avant la pulvérisation avec l'air comprimé (124).

4. Procédé selon l'une quelconque des revendications 1 à 3, caractérisé en ce qu'on fait tourner la solution aqueuse d'urée (110) par l'intermédiaire de l'air comprimé (124) après la pulvérisation.

5. Procédé selon l'une quelconque des revendications 1 à 4, caractérisé en ce qu'on dose de manière entièrement automatique la quantité exacte stoechiométrique de solution aqueuse d'urée (110) en ce qui concerne le débit massique des NOₓ à réduire.

6. Procédé selon l'une quelconque des revendications 1 à 5, caractérisé en ce qu'on introduit le courant des effluents gazeux (30) mélangé de façon homogène avec la solution aqueuse d'urée (110) pulvérisée dans la région du canal de réaction (18) de façon alternée dans des canaux longitudinaux (68) des catalyseurs (36, 38) selon un régime laminaire et dans les espaces intermédiaires (42) libres se trouvant entre les catalyseurs selon un régime turbulent.

7. Procédé selon l'une quelconque des revendications 1 à 6, caractérisé en ce que les catalyseurs d'oxydation (38) agissent de manière sélective en ce qui concerne les constituants CO, HC et/ou SO₂.

8. Procédé selon l'une quelconque des revendications 1 à 7, caractérisé en ce qu'on insuffle seulement de l'air comprimé (124) au début de la réaction, puis qu'on raccorde la solution aqueuse d'urée (110), et qu'on déconnecte à la fin de la réaction la solution aqueuse d'urée (110), puis qu'on purge le porteur d'urée (108) et la buse (78).

9. Installation de purification d'effluents gazeux (10) comprenant un réservoir d'agent de réaction (20), un dispositif de dosage (22), d'introduction et de pulvérisation pour la solution aqueuse d'urée (110) et une commande et une régulation (44) électriques de l'installation pour la mise en oeuvre du procédé selon l'une quelconque des revendications 1 à 8, où
- l'installation présente un canal de pyrolyse (14), un canal de mélange (16) et un canal de réaction (18), lesquels sont spatialement séparés,
- le dispositif d'introduction a la forme d'un appareil de buse à deux matières (26) possédant un tube d'enveloppe (24) extérieur pour l'air comprimé (124) et un porteur d'urée (108) interne disposé à distance et se dresse dans le canal de pyrolyse (14), et comprend une buse (78) pour pulvériser finement la solution aqueuse d'urée (110),
- dans le canal de mélange (16) sont disposés à distance l'un de l'autre au moins deux mélangeurs à courants croisés (34), et
- dans le canal de réaction (18) dans la direction du courant des effluents gazeux (30) sont montés au moins deux catalyseurs de réduction (36) formés avec des canaux longitudinaux (68), en nid d'abeilles, construits de façon modulaire, disposés l'un derrière l'autre et au moins un catalyseur d'oxydation (38),
caractérisée en ce que l'appareil de buse à deux matières (26) comprend un boîtier de vanne (86) avec une vanne à bille trois voies (88) qui peut être actionnée en étant commandée électroniquement y compris les canalisations d'introduction correspondantes, à savoir une tubulure (114) pour l'introduction de la solution d'urée (110), une canalisation d'air comprimé (120) qui fait face diamétralement et une ouverture d'écoulement conduisant au porteur d'urée (108) dans un appui de tuyau (102).

10. Installation de purification d'effluents gazeux (10) selon la revendication 9, caractérisée en ce que la buse (78) de l'appareil de buse à deux matières (26) présente des rainures inclinées pour attribuer une torsion à l'air comprimé (124) et/ou des canaux inclinés pour le faire tourner.

11. Installation de purification d'effluents gazeux (10) selon l'une quelconque des revendications 9 ou 10, caractérisée en ce que le canal de pyrolyse (14), le canal de mélange (16) et le canal de réaction (18), sont dans la forme de parallélépipèdes disposés les uns à côté des autres et/ou les uns au-dessus des autres, les ouvertures correspondantes (54, 56 ; 62) pour le courant gazeux (30) étant formées avec des tôles de guidage (52, 60, 64).

12. Installation de purification d'effluents gazeux (10) selon l'une quelconque des revendications 9 ou 10 , caractérisée en ce que les catalyseurs de réduction et d'oxydation (36, 38) des corps en nid d'abeilles (66) montés dans le canal de réaction (18) ont une section transversale en particulier carrée, rectangulaire ou hexagonale, de préférence avant le premier catalyseur de réduction (36) une tôle perforée (35) étant disposée pour uniformiser l'écoulement.

13. Installation de purification d'effluents gazeux (10) selon la revendication 12, caractérisée en ce que les corps en nid d'abeilles (66) construits de façon modulaire sont poussés avec plusieurs modules ayant une section transversale de préférence d'environ 150 x 150 mm et une longueur de 50, 150 ou 300 mm, les uns à côtés des autres, les uns au-dessus des autres et/ou les uns derrière les autres ou sont disposés à distance les uns des autres.

14. Installation de purification d'effluents gazeux (10) selon l'une quelconque des revendications 9 à 13, caractérisée en ce que les corps en nid d'abeilles (66) sont recouverts sur le côté de la longueur avec un bas (70) élastique, ayant à peu près une surface plane, constitué d'un matériau ignifuge, de préférence d'un tricot en fibres de verre.

15. Installation de purification d'effluents gazeux (10) selon l'une quelconque des revendications 9-14, caractérisée en ce qu'au moins la surface active des catalyseurs de réduction (36) est constituée d'oxyde de titane, de tungstène et/ou de vanadium, qu'au moins la surface active des catalyseurs d'oxydation (38) est constituée d'un métal précieux, de préférence de platine, de rhodium et/ou de palladium.
